# EUROPÄISCHE PATENTSCHRIFT

(11) **EP 0 736 135 B1**
(45) Veröffentlichungstag und Bekanntmachung des Hinweises auf die Patenterteilung: **22.07.1998**
(21) Anmeldenummer: 95904515.4
(22) Anmeldetag: 21.12.1994
(51) Int. Cl.: F01N 3/28, F01N 3/20

(54) **KATALYSATOR SOWIE HERSTELLUNGSVERFAHREN DAFÜR**
CATALYTIC CONVERTER AND PROCESS FOR ITS MANUFACTURE
CATALYSEUR ET SON PROCEDE DE FABRICATION

(30) Priorität: 21.12.1993 DE 4343705
(43) Veröffentlichungstag der Anmeldung: 09.10.1996
(73) Patentinhaber: Heraeus Electro-Nite International N.V., 3530 Houthalen (BE)
(72) Erfinder: Häfele, Edelbert, D-76228 Karlsruhe (DE); Seeger, Walter, D-76571 Gaggenau (DE)
(74) Vertreter: Kühn, Hans-Christian
(86) Internationale Anmeldenummer: EP9404251
(87) Internationale Veröffentlichungsnummer: WO9517587

(56) Entgegenhaltungen:
- EP-A- 0 437 626
- EP-A- 0 460 611
- WO-A-94/15079
- DE-A- 4 017 360
- US-A- 5 094 074

## Beschreibung

Die Erfindung betrifft einen Katalysator gemäß dem Oberbegriff des Hauptanspruches sowie ein Herstellungsverfahren dafür , wobei nur sogenannte Metallite gattungsgemäß betroffen sind.

Bei bekannten Katalysatoren bestehen Probleme mit dem nichthochfesten Aufbau, insbesondere bei Verwendung der Katalysatoren in Kraftfahrzeugen. Hierbei bereiten die ständige mechanische Dauerbelastung und außerdem die thermische Ausdehnung, insbesondere bei sogenannten Starterkats, welche zu Anfang ihres Betriebs elektrisch geheizt werden, nicht geringe Probleme.

Es ist ferner eine Vorrichtung gemäß dem Oberbegriff des Hauptanspruchs bekannt (EP-A-0 437 626 und EP-A-0 460 611). Hierbei wird eine gewellte und eine flächige Folie an den Berührungsstellen punkt- und/oder linienförmig miteinander unter Bildung eines Pakets kraftschlüssig verbunden.

Ferner werden gewellte und ebene Folien miteinander unter Bildung von Kanälen eingesetzt (US-A-5,094,074), wobei aber nicht die Folien selbst miteinander verlötet sind, sondern die damit oberflächlich versehenen Keramikschichten. Die metallischen Schichten sind nicht miteinander kraftschlüssig verbunden. Dies gilt umsomehr, als die ebenen Folien mäanderförmig geführt sind und alleine stromleitend sein sollen. Mit der Verbindung über die mechanischen Schichten läßt sich ein mechanisch hochfester Aufbau nicht erreichen, geschweige denn eine Kompensation der thermischen Ausdehnung im rauhen Betrieb in einer Abgasanlage.

Es ist also entweder ein nicht beheizbarer Katalysator mit stabilen Paketen bekannt, oder aber ein Starterkatalysator, dessen mechanischer Aufbau zu wünschen übrig läßt.

Der Erfindung liegt die Aufgabe zugrunde, einen Katalysator mit mechanisch hochfestem Aufbau und guter Kompensation der thermischen Ausdehnung sowie ein Herstellungsverfahren dafür vorzuschlagen.

Diese Aufgabe wird bei einem gattungsgemäßen Katalysator sowie einem Verfahren zur Herstellung eines solchen Katalysators gemäß dem Oberbegriff des Verfahrens- und Vorrichtungsanspruches erfindungsgemäß durch die jeweiligen kennzeichnenden Merkmale gelöst.

Erfindungsgemäß werden also aus einer Vielzahl der metallischen, gewellten sowie flächigen Folien zuerst Pakete, vorzugsweise durch Laserschweißen hergestellt, die für sich mechanisch hochfest und stabil sind sowie thermisch belastbar sind. Diese Pakete sind mit den elektrisch beheizbaren Folien versehen, und zwar durch Ein- und /oder Anbau. Diese ebenfalls flächigen, vorzugsweise ebenen beheizbaren Folien können auch durch Schweißen mit den gewellten Folien kraftschlüssig verbunden werden, wobei dann nur im metallischen Bereich unter Außschluß der Widerstandsheizschicht geschweißt wird. Der Vorteil besteht in der guten, sowie festen Verbindung der Folien, die gut wärmeleitend über direkten metallischen Kontakt miteinander in Verbindung stehen.

Im montierten Zustand wird dann die gesamte Einheit mit der katalytisch wirksamen Schicht, beispielsweise durch Tauchen beschichtet.

Durch die nachträgliche Aufbringung der katalytisch wirksamen Beschichtung wird auch im Bereich der elektrisch beheizbaren Folienbahnen konvertiert, wobei die Beschichtung überdies als Schutz für die Folienheizung dient. Von ganz besonderem Vorteil ist jedoch, daß die elektrische Widerstandsheizschicht der elektrisch beheizbaren Folie mechanisch völlig unbelastet ist und daher auch nicht durch Vibrationen an den Berührungsstellen mit anderen Folien und/oder Blechen beschädigt werden kann, weil eine gut wärmeleitende Verbindung mit dem Paket nur in Bereichen außerhalb der elektrischen Widerstandsheizschicht erfolgt.

Zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert.

In dieser zeigt:
- Figur 1: einen Katalysator, im schematischen Querschnitt (Schnitt I-I) gemäß Fig. 2;
- Figur 2: den Katalysator gemäß Fig. 1, in schematischer Draufsicht;
- Figur 3: die Einzelheit III gemäß Fig. 1;

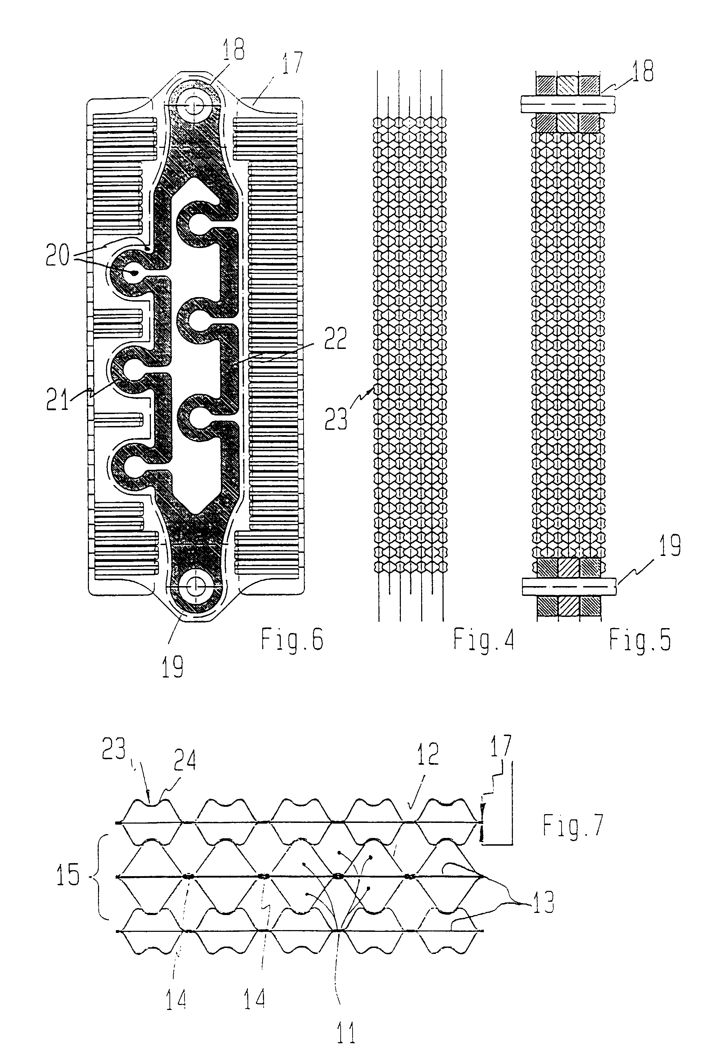

- Figur 4: die Einzelheit gemäß Fig. 3 im kleinerem Maßstab;
- Figur 5: einen Schnitt V-V gemäß Fig. 2;
- Figur 6: eine elektrisch beheizbare Folie, in schematischer Draufsicht; und
- Figur 7: die Einzelheit VII gemäß Fig. 3, in teilweise abgebrochener Darstellung und größerem Maßstab.
- Figur 8: eine alternative Ausführungsform der elektrisch beheizbaren Folie, in Draufsicht
- Figur 9: einen Schnitt IX - IX gemäß Figur 8 und
- Figur 10: eine alternative Ausführungsform der Beschichtung der elektisch beheizbaren Folie gemäß Fig. 9.

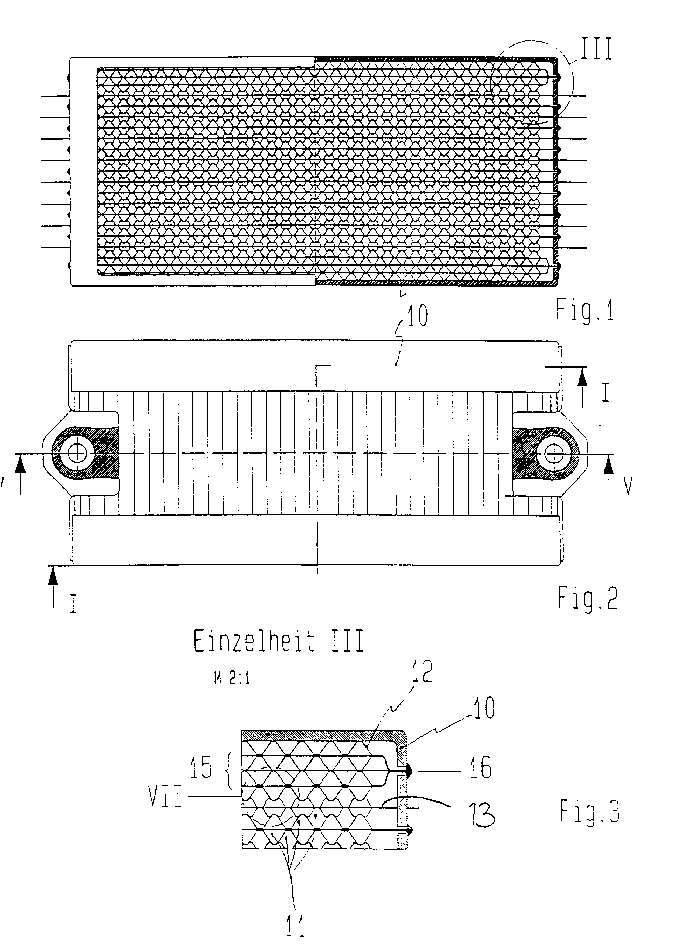

In einem insgesamt mit 10 bezeichneten Gehäuse gemäß Fig. 1 sind eine Vielzahl von parallel zueinander verlaufenden Kanälen 11 (Fig. 3) vorgesehen, die von Zwischenräumen gebildet werden, die zwischen einer gewellten Folie 12 (Fig. 7) gebildet werden. Hierbei werden die gewellten Folien 12 und die flächige ebene Folie 13 an den Berührungsstellen 14 (Fig. 7) punkt- und/oder linienförmig unter Bildung eines Paketes 15 miteinander verschweißt. Die Pakete 15 sind bereichsweise durch das Gehäuse 10 hindurchgeführt und dort beispielsweise durch Schweißpunkte 16 unverrückbar festgelegt.

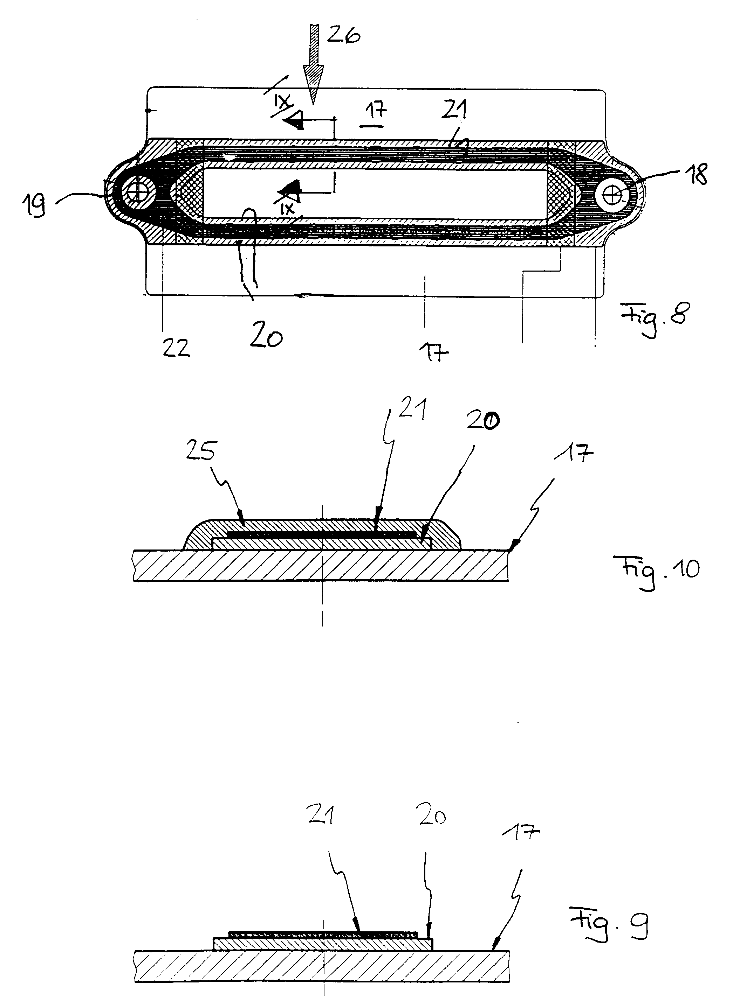

Ferner ist eine elektrisch beheizbare Folie 17 (Fig. 6) vorgesehen, die beim wiedergegebenen Ausführungsbeispiel auf ihrer Vorderseite zwei sich zwischen Anschlußbereichen 18, 19 erstreckende auf einer elektrischen Isolatorschicht 20 aufgebrachte elektrisch leitende Widerstandsheizschichten 21, 22 aufweist (Figur 9). Diese können im wesentlichen mäanderförmig zueinander verlaufen und im Siebdruckverfahren auf die elektrische Isolierschicht 20 aufgebracht sein. Eine alternative Ausführungsform ist in Figur 8 dargestellt, wobei dort die beiden elektrischen Widerstandsheizschichten 21,22 parallel zueinander verlaufen und sich linienförmig erstrecken. Zusätzlich können die beiden Schichten 20,21 durch eine Schutzschicht 25, z.B. wash-coat abgedeckt sein (Figur 10). Diese elektrisch beheizbare Folie 17, welche zunächst beim Aufbringen der elektrischen Isolatorschicht und der beiden elektrischen Widerstandsheizschichten 21, 22 eben ausgebildet ist, kann nach der ersten Ausführungsform bereichsweise außerhalb dieser Schicht wellenförmig verformt, wobei die Wellenform an jene der gewellten Folie 12 (Fig. 7) angepaßt ist und in jeder Welle 23 eine Mulde 24 vorgesehen ist -bei der alternativen Ausführungsform ist die elektrisch beheizbare Folie 17 jedoch planeben ausgebildet und außerhalb der beiden elektrischen Widerstandsheizschichten 21,22 mit der flächigen Folie 13 des Pakets 15 verschweißt-. Es können nunmehr zwei dieser beheizbaren Folien 17 mit ihrer Rückseite aufeinander gelegt werden und so in das Gehäuse 10 eingebaut werden, daß zumindest an einer Seite, vorzugsweise aber an beiden Seiten eines Paketes 15 je solch ein Paar elektrisch beheizbarer Folien 17 so angeordnet ist, daß in den Mulden 24 der Wellen 23 eine vorspringende Welle der gewellten Folie 12 satt zur Anlage kommt, wodurch sich eine gut wärmeleitende Verbindung ergibt. Außerdem wird durch diese Form sichergestellt, daß Wärmespannungen durch die Wellenform aufgenommen werden können, ohne daß hierbei Beschädigungen der elektrischen Widerstandsheizschicht 21, 22 der elektrisch beheizbaren Folie 17, die sich im ebenen, unverformten Bereich derselben befindet, zu befürchten sind. Erst in diesem Zustand, zumindest aber im geschweißten Zustand der einzelnen Folien oder Pakete wird die katalytisch wirksame Beschichtung vorgenommen.

Von besonderem Vorteil ist es auch, wenn nach der Startphase die elektrische Widerstandsheizschicht 21, 22 beispielsweise dazu benötigt wird, um die Funktion des Katalysators zu überwachen. Bei Anlage einer konstanten Spannung wird, in Abhängigkeit von der Temperatur ein bestimmter elektrischer Strom zu erwarten sein, den man mißt. Entspricht dieser den Betriebsbedingungen des Katalysators kann von seiner ordnungsgemäßen Funktion ausgegangen werden. Weicht er jedoch ab, so kann auf eine mangelnde Funktion des Katalysators geschlossen werden.

## Patentansprüche

1. Katalysator zur Reinigung von Abgas aus Verbrennungsprozessen, insbesondere Abgas von Verbrennungsmotoren, mit einem Gehäuse (10) und mit einer darin angeordneten Vielzahl von zueinander parallelverlaufenden, aus einer zwischen zumindest einer flächigen Folie (13) angeordneten gewellten Folie (12) gebildeten Kanälen (11), wobei die flächige und/oder gewellte Folie zumindest teilweise mit einer katalytisch wirksamen Beschichtung versehen sind, wobei zumindest je eine der gewellten Folien (12) und eine der flächigen Folien (13) an den Berührungsstellen (14) punkt- und/oder linienförmig miteinander unter Bildung eines Pakets (15) kraftschlüssig verbunden, vorzugsweise verlötet oder verschweißt sind und wobei eine Vielzahl von zueinander benachbarten, gewellten (12) sowie flächigen Folien (13) miteinander an den Berührungsstellen (14) kraftschlüssig unter Bildung des Pakets verbunden ist,
**dadurch gekennzeichnet,**
daß an oder in zumindest einem Paket (15) zumindest eine elektrisch beheizbare Folie (17) gut wärmeleitend verbunden angeordnet ist.

2. Katalysator nach Anspruch 1, dadurch gekennzeichnet, daß die elektrisch beheizte Folie (17) mit einer elektrischen Widerstandsheizschicht (21, 22) mindestens mit einer elektrischen Isolationsschicht (20) wenigstens bereichsweise versehen ist.

3. Katalysator nach einem der Ansprüche 1 bis 2, dadurch gekennzeichnet, daß die elektrische Isolatorschicht (20) durch Bedrucken, Spritzen oder Tauchen aufgebracht ist.

4. Katalysator nach einem der Ansprüche 1 bis 3, dadurch gekennzeichnet, daß die elektrisch beheizbare Folie (17) mit einer elektrischen Widerstandsheizschicht zumindest im Bereich der elektrischen Widerstandsheizschicht (21, 22) eben ausgebildet ist, ansonsten zumindest bereichsweise wellenförmig verformt sein kann, wobei die Wellenform an jene des gewellten Blechs (12) angepaßt ist und auf jeder Welle (23) eine Mulde (24) vorgesehen ist.

5. Katalysator nach Anspruch 4, dadurch gekennzeichnet, daß die wellenförmige Verformung auf nur einer oder beiden Seiten der elektrisch beheizbaren Folie (17) angebracht ist.

6. Katalysator nach einem der Ansprüche 1 bis 5, dadurch gekennzeichnet, daß zwischen zwei zueinander benachbarten gewellten Folien (12) zumindest eine eben ausgebildete elektrisch beheizbare Folie (17) in gut wärmeleitender Verbindung montiert ist.

7. Katalysator nach Anspruch 6, dadurch gekennzeichnet, daß das Paket (15) zwei oder mehr beheizte Folien (17) aufweist.

8. Katalysator nach einem der Ansprüche 1 bis 7, dadurch gekennzeichnet, daß zwei elektrisch beheizbare Folien (17) mit der wellenförmigen Verformung auf nur einer Seite mit deren anderer Seite aufeinandergelegt und zusammen zwischen zwei Paketen so angeordnet werden, daß die Wellen des gewellten Blechs zumindest teilweise in den Mulden (24) der Wellen (23) elektrisch beheizbaren Folie (17) liegen.

9. Katalysator nach einem der Ansprüche 1 bis 8, dadurch gekennzeichnet, daß die Wellen des gewellten Blechs (12) des Paketes (15) zum Teil in den Mulden (24) der Wellen (23) der elektrisch beheizbaren Folie (17) zur Anlage kommen.

10. Herstellungsverfahren für einen Katalysator nach einem der Ansprüche 1 bis 9, zum Zwecke der Reinigung von Abgas aus Verbrennungsprozessen, vorzugsweise Abgas von Verbrennungsmotoren, mit einer Vielzahl von zueinander parallelverlaufenden, aus flächigen Folien (13) und einer gewellten Folie (12) gebildeten Kanälen (11), wobei die flächigen und/oder die gewellten Folien (13, 12) zumindest teilweise mit einer katalytisch wirksamen Beschichtung versehen sind, wobei zuerst zumindest je eine der gewellten und die flächige Folie im metallischen Zustand aufeinandergelegt und in dieser Lage kraftschlüssig unter Bildung eines Pakets (15) gehalten sind und das Paket (15) durch eine kraftschlüssige Verbindung der gewellten Folie (12) mit der flächigen Folie (13) an den Berührungsstellen (14) gebildet ist und wobei die kraftschlüssige Verbindung der Folien (12, 13) an den Berührungsstellen (14) durch punkt- und/oder linienförmiges Laserschweißen gebildet wird, dadurch gekennzeichnet, daß auf eine gewellte Folie (12) des Pakets (15) je eine flächige Folie (13) und eine weitere gewellte Folie (12) so aufgelegt werden, daß sich die Berührungsstellen der beiden gewellten Folien an der gleichen Stelle, aber auf entgegengesetzten Seiten der dazwischenliegenden flächigen Folie (13) befinden und daß die zwei aufgelegten Folien (12, 13) mit der gewellten Folie (12) des Pakets (15) durch Laserschweißen kraftschlüssig verbunden werden und daß das Paket (15) mit zumindest einer elektrisch beheizbaren Folie (17) in gut wärmeleitendem Zustand montiert wird.

11. Verfahren nach Anspruch 10, dadurch gekennzeichnet, daß das durch Schweißen erhaltene Paket (15), gegebenenfalls montiert und danach mit der katalytisch wirksamen Schicht beschichtet wird.

12. Verfahren nach einem der Ansprüche 10 oder 11, dadurch gekennzeichnet, daß die Beschichtung durch Tauchen erfolgt.

13. Verfahren nach einem der Ansprüche 10 bis 12, dadurch gekennzeichnet, daß die elektrisch beheizbare Folie (17) mit einer elektrischen Isolatorschicht (20) versehen wird.

14. Verfahren nach Anspruch 13, dadurch gekennzeichnet, daß die elektrische Isolatorschicht (20) durch Bedrucken, Spritzen, Tauchen, Aufdampfen oder Oxidationsglühen aufgebracht wird.

15. Verfahren nach einem der Ansprüche 10 bis 14, dadurch gekennzeichnet, daß auf die elektrische Isolatorschicht (20) zumindest eine elektrisch leitende Widerstandsheizschicht (21, 22) aufgebracht wird.

16. Verfahren nach Anspruch 15, dadurch gekennzeichnet, daß die elektrische Widerstandsheizschicht (21, 22) im Siebdruckverfahren aufgebracht wird.

17. Verfahren nach einem der Ansprüche 10 bis 16, dadurch gekennzeichnet, daß die elektrisch beheizbare Folie (17) vor oder nach dem Aufbringen der elektrischen Isolatorschicht (20) oder der elektrischen Widerstandsheizschicht (21, 22) eben ausgebildet ist und danach bereichsweise außerhalb der Schichten wellenförmig verformt wird, wobei die Wellenform an jene des gewellten Blechs (12) angepaßt ist und wobei auf jeder Welle (23) eine Mulde (24) vorgesehen ist.

18. Verfahren nach Anspruch 17, dadurch gekennzeichnet, daß die wellenförmige Verformung auf nur einer der beiden Seiten der elektrisch beheizbaren Folie (7) angebracht ist.

19. Verfahren nach Anspruch 17, dadurch gekennzeichnet, daß die wellenförmige Verformung auf beiden Seiten der elektrisch beheizbaren Folie (7) angebracht ist.

20. Verfahren nach einem der Ansprüche 10 bis 19, dadurch gekennzeichnet, daß zwischen zwei Paketen (15) zumindest eine elektrisch beheizbare Folie (17) im gut wärmeleitenden Zustand so montiert wird, daß die Wellen des gewellten Blechs (12) zumindest teilweise in den Mulden (24) der Wellen (23) der elektrisch beheizbaren Folie (17) liegen.

21. Verfahren nach Anspruch 20, dadurch gekennzeichnet, daß zwei elektrisch beheizbare Folien (17) mit der wellenförmigen Verformung auf nur einer Seite mit deren anderer Seite aufeinandergelegt und zusammen zwischen zwei Paketen (15) so angeordnet werden, daß die Wellen des gewellten Blechs (12) zumindest teilweise in den Mulden (24) der Wellen (23) der elektrisch beheizbaren Folie (17) liegen.

22. Verfahren nach Anspruch 20 oder 21, dadurch gekennzeichnet, daß die zwischen zwei Paketen (15) angeordnete (n) elektrisch beheizbare Folie(n) (17) im montierten Zustand mit der katalytisch wirksamen Schicht beschichtet wird(werden).

23. Verfahren nach Anspruch 22, dadurch gekennzeichnet, daß die katalytisch wirksame Schicht durch Tauchen erhalten wird.

## Claims

1. A catalyst for the cleaning of exhaust gas from combustion processes, in particular exhaust gas from internal combustion engines, with a housing (10) and with a plurality of channels (11), arranged therein, running parallel to each other and formed from a corrugated foil (12) arranged between at least one flat foil (13), wherein the flat and/or corrugated foil are at least partially provided with a catalytically active coating, wherein at least one of the corrugated foils (12) in each case and one of the flat foils (13) are connected with each other with a force-fit at the contact points (14) in a punctiform and/or linear manner, forming a set (15), preferably are soldered or welded, and wherein a plurality of adjacent corrugated (12) and flat foils (13) is connected with each other at the contact points (14) with a force-fit, forming the set,
characterised in that
on or in at least one set (15) at least one electrically heatable foil (17) is arranged, connected so as to be conducting heat well.

2. A catalyst according to Claim 1, characterised in that the electrically heated foil (17) is provided with an electrical resistance heating layer (21, 22) at least with one electrical insulation layer (20) at least in parts.

3. A catalyst according to one of Claims 1 to 2, characterised in that the electrical insulator layer (20) is applied by printing, spraying or dipping.

4. A catalyst according to one of Claims 1 to 3, characterised in that the electrically heatable foil (17) with an electrical resistance heating layer is constructed so as to be flat at least in the region of the electrical resistance heating layer (21, 22), otherwise can be shaped in a corrugated form at least in parts, wherein the corrugated shape is adapted to that of the corrugated metal sheet (12) and a depression (24) is provided on each corrugation (23).

5. A catalyst according to Claim 4, characterised in that the corrugated shaping is arranged on only one or both faces of the electrically heatable foil (17).

6. A catalyst according to one of Claims 1 to 5, characterised in that between two adjacent corrugated foils (12) at least one electrically heatable foil (17) of flat construction is mounted in a connection which is able to conduct heat well.

7. A catalyst according to Claim 6, characterised in that the set (15) has two or more heated foils (17).

8. A catalyst according to one of Claims 1 to 7, characterised in that two electrically heatable foils (17) with the corrugated shaping on only one face are placed onto each other by their other face,and are arranged together between two sets so that the corrugations of the corrugated metal sheet at least partially lie in the depressions (24) of the corrugations (23) of the electrically heatable foil (17).

9. A catalyst according to one of Claims 1 to 8, characterised in that the corrugations of the corrugated metal sheet (12) of the set (15) come to lie partially in the depressions (24) of the corrugations (23) of the electrically heatable foil (17).

10. A manufacturing process for a catalyst according to one of Claims 1 to 9, for the purpose of cleaning exhaust gas from combustion processes, preferably exhaust gas from internal combustion engines, with a plurality of channels (11), running parallel to each other, formed from flat foils (13) and from a corrugated foil (12), wherein the flat and/or the corrugated foils (13, 12) are provided at least partly with a catalytically active coating, wherein firstly at least one each of the corrugated and the flat foil in metallic state are placed onto each other and are held in this position with a force fit, forming a set (15), and the set (15) is formed by a force-fitting connection of the corrugated foil (12) with the flat foil (13) at contact points (14) and wherein the force-fitting connection of the foils (12, 13) is formed at the contact points (14) by punctiform and/or linear laser welding, characterised in that a flat foil (13) and a further corrugated foil (12) are each placed onto a corrugated foil (12) of the set (15), so that the contact points of the two corrugated foils are to be found at the same place, but on opposite faces of the flat foil (13) lying therebetween and that the two foils (12, 13) which are placed on are connected in a force fit with the corrugated foil (12) of the set (15) by laser welding and that the set (15) is mounted with at least one electrically heatable foil (17) in a good heat conducting state.

11. A method according to Claim 10, characterised in that the set (15) obtained by welding is mounted if necessary and thereafter coated with the catalytically active layer.

12. A method according to one of Claims 10 or 11, characterised in that the coating takes place by dipping.

13. A method according to one of Claims 10 to 12, characterised in that the electrically heatable foil (17) is provided with an electrical insulator layer (20).

14. A method according to Claim 13, characterised in that the electrical insulator layer (20) is applied by printing, spraying, dipping, depositing by evaporation, or oxidation annealing.

15. A method according to one of Claims 10 to 14, characterised in that at least one electrically conducting resistance heating layer (21, 22) is applied onto the electrical insulator layer (20).

16. A method according to Claim 15, characterised in that the electrical resistance heating layer (21, 22) is applied by the screen printing process.

17. A method according to one of Claims 10 to 16, characterised in that the electrically heatable foil (17) before or after the application of the electrical insulator layer (20) or the electrical resistance heating layer (21, 22) is constructed flat, and thereafter is formed in a corrugated shape in areas outside the layers, wherein the corrugated shape is adapted to that of the corrugated metal sheet (12) and wherein a depression (24) is provided on each corrugation (23).

18. A method according to Claim 17, characterised in that the corrugated deformation is arranged on only one of the two faces of the electrically heatable foil (7).

19. A method according to Claim 17, characterised in that the corrugated deformation is arranged on both faces of the electrically heatable foil (7).

20. A method according to one of Claims 10 to 19, characterised in that between two sets (15) at least one electrically heatable foil (17) is mounted in a good heat conducting state, so that the corrugations of the corrugated metal sheet (12) lie at least partially in the depressions (24) of the corrugations (23) of the electrically heatable foil (17).

21. A method according to Claim 20, characterised in that two electrically heatable foils (17) with the corrugated shaping on only one face are placed onto each other by their other face and are arranged together between two sets (15) so that the corrugations of the corrugated metal sheet (12) lie at least partially in the depressions (24) of the corrugations (23) of the electrically heatable foil (17).

22. A method according to Claim 20 or 21, characterised in that the electrically heatable foil(s) (17) arranged between two sets (15) in the mounted state is/are coated with the catalytically active layer.

23. A method according to Claim 22, characterised in that the catalytically active layer is obtained by dipping.

## Revendications

1. Catalyseur pour l'épuration des gaz d'échappement résultant de processus de combustion, en particulier gaz d'échappement de moteurs à combustion interne, comportant un boîtier (10) et, disposés dans ce boîtier, une pluralité de canaux (11) orientés parallèlement l'un à l'autre et formés d'une feuille ondulée (12) disposée entre au moins une feuille aplatie (13), la feuille aplatie et/ou la feuille ondulée étant munies, au moins partiellement, d'un revêtement à action catalytique, au moins l'une des feuilles ondulées (12) et l'une des feuilles aplaties (13) étant réunies l'une à l'autre à force, de préférence brasées ou soudées, aux endroits de contact (14), sous forme ponctuelle et/ou linéaire, avec formation d'un paquet (15), et une pluralité de feuilles (13) voisines l'une de l'autre, ondulées (12) aussi bien qu'aplaties, étant réunies l'une à l'autre à force, aux points de contact (14), avec formation du paquet,
caractérisé
par le fait que sur ou dans au moins un paquet (15) au moins une feuille (17) chauffante électriquement est disposée, reliée avec une bonne conduction électrique.

2. Catalyseur selon la revendication 1, caractérisé par le fait que la feuille (17) chauffée électriquement est munie, au moins par zone, d'une couche chauffante (21, 22) à résistance électrique avec au moins une couche électriquement isolante (20).

3. Catalyseur selon l'une des revendications 1 à 2, caractérisé par le fait que la couche électriquement isolante (20) est appliquée par impression, projection ou trempage.

4. Catalyseur selon l'une des revendications 1 à 3, caractérisé par le fait que la feuille (17) chauffante électriquement et présentant une couche chauffante à résistance électrique est prévue, au moins dans la zone de la couche chauffante (21, 22) à résistance électrique, plane, et ailleurs, au moins par zone, peut être mise en forme d'ondes, la forme des ondes étant adaptée à celle de la tôle ondulée (12) et un enfoncement (24) étant prévu sur chaque onde (23).

5. Catalyseur selon la revendication 4, caractérisé par le fait que la mise en forme d'onde s'applique sur une face seulement, ou sur les deux faces, de la feuille (17) chauffante électriquement.

6. Catalyseur selon l'une des revendications 1 à 5, caractérisé par le fait qu'entre deux feuilles ondulées (12) voisines l'une de l'autre est montée, en liaison donnant une bonne conduction thermique, au moins une feuille (17) chauffante électriquement, prévue plane.

7. Catalyseur selon la revendication 6, caractérisé par le fait que le paquet (15) présente deux, ou davantage, feuilles chauffées (17).

8. Catalyseur selon l'une des revendications 1 à 7, caractérisé par le fait que deux feuilles (17) chauffantes électriquement et présentant la mise en forme d'onde sur une face seulement sont posées l'une sur l'autre par l'autre face et sont disposées ensemble entre deux paquets de façon que les ondes de la tôle ondulée se situent au moins partiellement dans les enfoncements (24) des ondes (23) de la feuille (17) chauffante électriquement.

9. Catalyseur selon l'une des revendications 1 à 8, caractérisé par le fait que les ondes de la tôle ondulée (12) du paquet (15) viennent partiellement en appui dans les enfoncements (24) des ondes (23) de la feuille (17) chauffante électriquement.

10. Procédé de fabrication d'un catalyseur selon l'une des revendications 1 à 9, aux fins de l'épuration des gaz d'échappement résultant de processus de combustion, de préférence des gaz d'échappement de moteurs à combustion interne, comportant une pluralité de canaux (11) orientés parallèlement l'un à l'autre et formés de feuilles aplaties (13) et d'une feuille ondulée (12); dans lequel les feuilles aplaties et/ou les feuilles ondulées (13, 12) sont, au moins partiellement, munies d'un revêtement à action catalytique, dans lequel tout d'abord au moins l'une des feuilles ondulées et la feuille aplatie sont posées l'une sur l'autre à l'état métallique et sont maintenues dans cette position, à force, avec formation d'un paquet (15), et dans lequel le paquet (15) est formé par une liaison à force de la feuille ondulée (12) avec la feuille aplatie (13) aux endroits de contact (14) et dans lequel la liaison à force des feuilles (12, 13) est formée, aux endroits de contact (14), par un soudage au laser sous forme ponctuelle et/ou linéaire, caractérisé par le fait que sur chacune des feuilles ondulées (12) du paquet (15) on pose une feuille aplatie (13) et une autre feuille ondulée (12) de façon que les endroits de contact des deux feuilles ondulées se trouvent au même endroit, mais sur les faces opposées de la feuille aplatie (13) située entre elles et que les deux feuilles (12, 13) posées l'une sur l'autre sont réunies à force avec la feuille ondulée (12) du paquet (15) par soudage au laser et que le paquet (15) comportant au moins une feuille (17) chauffante électriquement est monté dans un état de bonne conduction thermique.

11. Procédé selon la revendication 10, caractérisé par le fait que l'on monte éventuellement le paquet (15) obtenu par soudage et qu'on le revêt ensuite de la couche à action catalytique.

12. Procédé selon l'une des revendications 10 ou 11, caractérisé par le fait que le revêtement se fait par trempage.

13. Procédé selon l'une des revendications 10 à 12, caractérisé par le fait que l'on munit la feuille (17) chauffante électriquement d'une couche électriquement isolante (20).

14. Procédé selon la revendication 13, caractérisé par le fait que l'on applique la couche électriquement isolante (20) par impression, projection, trempage, vaporisation ou par oxydation par chauffage au rouge.

15. Procédé selon l'une des revendications 10 à 14, caractérisé par le fait que sur la couche électriquement isolante (20) on applique au moins une couche chauffante (21, 22) à résistance électriquement conductrice.

16. Procédé selon la revendication 15, caractérisé par le fait que l'on applique la couche chauffante (21, 22) à résistance électrique par le procédé de sérigraphie.

17. Procédé selon l'une des revendications 10 à 16, caractérisé par le fait que la feuille (17) chauffante électriquement est prévue plane avant ou après l'application de la couche électriquement isolante (20) ou de la couche chauffante (21, 22) à résistance électrique et qu'ensuite, par zone, on la met en forme d'ondes en dehors des couches, la forme d'onde étant adaptée à celle de la tôle ondulée (12) et un enfoncement (24) étant prévu sur chaque onde (23).

18. Procédé selon la revendication 17, caractérisé par le fait que la mise en forme d'ondes ne se fait que sur l'un des deux côtés de la feuille (7) chauffante électriquement.

19. Procédé selon la revendication 17, caractérisé par le fait que la mise en forme d'ondes se fait sur les deux côtés de la feuille (7) chauffante électriquement.

20. Procédé selon l'une des revendications 10 à 19, caractérisé par le fait qu'entre deux paquets (15) on monte au moins une feuille (17) chauffante électriquement à l'état de bonne conduction électrique de façon que les ondes de la tôle ondulée (12) se situent, au moins partiellement, dans les enfoncements (24) des ondes (23) de la feuille (17) chauffante électriquement.

21. Procédé selon la revendication 20, caractérisé par le fait que l'on pose sur l'autre, par leur autre face, deux feuilles (17) chauffantes électriquement ne présentant une mise en forme d'ondes que sur une seule face et qu'on les dispose ensemble entre deux paquets (15) de façon que les ondes de la tôle ondulée (12) se situent, au moins partiellement, dans les enfoncements (24) des ondes (23) de la feuille (17) chauffante électriquement.

22. Procédé selon les revendications 20 ou 21, caractérisé par le fait que l'on revêt à l'état monté, de la couche à action catalytique, la feuille (les feuilles) (17) disposée(s) entre deux paquets (15) et chauffante(s) électriquement.

23. Procédé selon la revendication 22, caractérisé par le fait que l'on obtient la couche à action catalytique par trempage.
